# EUROPEAN PATENT SPECIFICATION

(11) **EP 3 086 467 B1**
(45) Date of publication and mention of the grant of the patent: **01.07.2020**
(21) Application number: 15164661.9
(22) Date of filing: 22.04.2015
(51) Int. Cl.: H02P 21/00, H02P 21/12, H02K 7/09, H02K 11/21, H02P 21/22, H02P 21/28, H02P 21/14

(54) **METHOD OF CONTROLLING AN ELECTRICAL MACHINE**
VERFAHREN ZUR STEUERUNG EINER ELEKTRISCHEN MASCHINE
PROCÉDÉ DE COMMANDE D'UNE MACHINE ÉLECTRIQUE

(43) Date of publication of application: 26.10.2016
(73) Proprietor: Siemens Gamesa Renewable Energy A/S, 7330 Brande (DK)
(72) Inventor: Wu, Lijian, 7430 Ikast (DK)
(74) Representative: Aspacher, Karl-Georg

(56) References cited:
- WO-A1-2013/093894
- US-A- 5 708 346
- US-B1- 7 456 537

## Description

The invention describes a method of controlling an electrical machine; a control arrangement of an electrical machine; and a wind turbine.

In an electrical machine such as a motor or generator, the width of the airgap between armature and field is related to the electromagnetic performance of the electrical machine. The width of the airgap is generally understood to be the shortest distance between magnets of the field and windings of the armature. Generally, a narrow airgap improves the electromagnetic performance of the machine. Therefore, the airgap should be as small as possible in order to maximise the electromagnetic performance. However, in a very large electrical machine, it is very challenging to maintain a narrow airgap over its entire circumference and over its entire length, for example from the drive-end to the non-drive-end of a wind turbine generator. Care must be taken to ensure that the airgap is not smaller than a certain minimum at any point in order to avoid a collision between rotor and stator. The minimum airgap height is limited by various factors. For example, allowance must be made for manufacturing tolerances on components such as rotor housing, magnets, stator body, etc. Also, temperature differences must be taken into account, since the armature generally reaches a higher temperature than the rotor on account of losses in the windings of the armature. Thermal expansion can decrease the height of the airgap, particularly when the stator and its windings are arranged within an outer rotor.

Eccentricity of a circularly cylindrical component - e.g. the rotor - can result in local variations in the airgap height. Eccentricity of a permanent nature may develop for example during manufacture of the machine, during transport and installation of the machine or during its lifetime. Temporary eccentricity can also arise during adverse weather conditions from uneven wind loading of the rotor blades and a resulting imbalance in the magnetic forces. Eccentricity is associated with a non-uniform airgap width over the airgap circumference, i.e. the airgap will have regions with nominal width but also regions that are narrower than the nominal width and regions that are wider than the nominal width. The problem is exacerbated by the fact that the magnetic force over a narrower airgap region is greater than the magnetic force over a wider airgap region, so that an electrical machine with an eccentric component is characterized by a magnetic force imbalance and a corresponding reduction in efficiency. These problems are especially detrimental in the case of a large electrical machine in which the rotating component is supported by a single bearing, for example an outer rotor generator with a single bearing at the drive end for which any airgap inconsistencies are magnified at the (unsupported) non-drive end.

In one approach to avoid catastrophic collision on account of an excessively narrow local airgap width, any measureable and/or predictable detrimental factors such as eccentricity, manufacturing tolerances, temperatures etc., are obtained to predict a situation in which it would be safer to down-regulate the electrical machine or to shut it down in order to reduce the risk of collision. Alternatively, the electrical machine can be designed to take the above factors into consideration, i.e. with an airgap that is wide enough to avoid collision between rotor and stator during the lifetime of the machine, even in a worst-case condition given by the accumulation of detrimental eccentricity factors mentioned above. A suitably wide airgap can ensure that a local narrowing due to eccentricity is still within a safe limit, so that the electrical machine can continue to operate even during such a worst-case situation. However, such a relatively large airgap width comes with the penalty of worse electromagnetic performance overall. In the case of a wind turbine, a relatively large airgap presents a trade-off between a possible extension of the generator's uptime and a definite sacrifice of power output. In another approach, as proposed in WO 2013/093894 A1, a decrease in airgap width is detected and an additional in-phase current is fed into a selected winding or group of windings in order to balance the stress on the rotor. This method essentially responds to a decrease in airgap width by generating a localized additional magnetic force in another region of the generator, but does not act to correct the cause of the airgap width decrease. It is therefore an object of the invention to provide a way of overcoming the problems described above.

This object is achieved by the method of claim 1 of controlling an electrical machine; and by the control arrangement of claim 7.

According to the invention, the method of controlling an electrical machine - with a rotor and a stator separated by an airgap - comprises the steps of obtaining a measurement of airgap width during operation of the machine; determining a corrective value of negative Id current on the basis of the airgap width measurement when the airgap width measurement reaches a predetermined minimum. This predetermined minimum airgap width is determined on the basis of a nominal airgap width and/or a manufacturing tolerance and/or stator temperature and/or rotor temperature and/or a measure of rotor eccentricity. The inventive method further comprises a step of injecting the negative Id current to correct the airgap width.

The expression "injecting negative Id current" is used in its accepted context: a negative value of Id current is determined under application of the known direct-quadrature-zero (dq0) transformation, and an inverse transform is applied to obtain values of phase current to be injected into the windings. The skilled person will be familiar with the mathematical techniques involved. Examples of said mathematical techniques are shown in the article
"Dq0 transform", published in http://www.openelectrical.orq/wiki/index.php?title=Dq0 Transf orm
or the article
"Dqo transformation" from Wikipedia, published in http://en.wikipedia.org/w/index.php?title=Dqo transformation& printa.

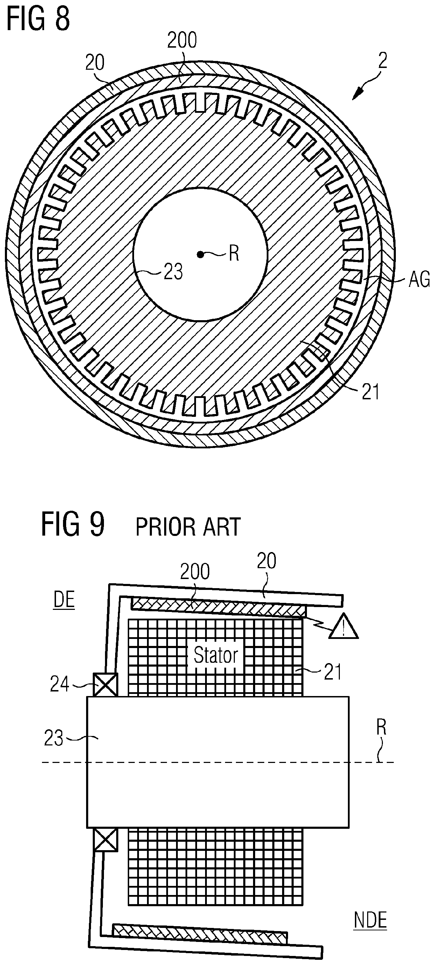

The problems known from the prior art electrical machines are explained using the example of a wind turbine generator. Fig. 8 shows a greatly simplified cross-section through a prior art outer rotor generator 2, in a plane orthogonal to the axis of rotation R of the generator 2. The diagram shows a stator 21 arranged on a hollow shaft 23. The stator 21 carries the generator windings (not shown) between projecting stator teeth. The outer rotor 20 carries an arrangement of permanent magnets 200. The magnets and windings are separated by an airgap AG. The airgap AG should be as uniform as possible, and is preferably very narrow, for example only a few millimetres, in order to make the generator 2 as efficient as possible. However, for the reasons given in the introduction, the airgap of a large electrical machine such as a wind turbine generator is seldom uniform over its entire circumference. Particularly in the case of a direct-drive generator, in which the outer rotor is supported by a single main bearing at the drive end, any eccentricity in the rotor 2 can present a serious problem, since any local critically narrow region in the airgap can be made even worse - i.e. narrowed even further - by the already present radial force acting on the rotor to pull it towards the stator. This is illustrated (exaggerated to a certain extent) in Fig. 9, which shows an axial cross-section through the generator 2 of Fig. 8. The outer rotor 20 is supported at the drive end DE by a main bearing 24 about a central hollow shaft 23. Any eccentricity in the rotor 20 results in a departure from its ideal circular cross-sectional shape and airgap regions that are too narrow and other airgap regions that are too wide. This is made worse by the stronger radial magnetic force acting across the narrow airgap regions, making them even narrower. A collision between rotor 20 and stator 21 could result, as indicated by the warning symbol in the diagram.

An advantage of the method according to the invention is that the electrical machine can be controlled during operation in such a way that its airgap is prevented at all times from becoming critically narrow. The method according to the invention can therefore avoid having to down-regulate or shut-down the electrical machine in order to avoid the risk of collision damage explained above. The method according to the invention can be applied to various different kinds of synchronous or asynchronous electrical machine, for example it may be used to control a permanent-magnet electrical machine, an electrically excited machine without permanent magnets, etc.

According to the invention, the control arrangement (1) of an electrical machine (2) comprises a rotor (20) and a stator (21) separated by an airgap (AG), which control arrangement (1) comprises
- a measuring arrangement (10) realized to obtain a measurement (100) of airgap width (WAG) during operation of the machine (2);
- an evaluation unit (11) realized to determine a corrective value of negative Id current (110) on the basis of the airgap width measurement (wAG) when the airgap width measurement (WAG) reaches a predetermined minimum airgap width (wMIN), which predetermined minimum airgap width (WMIN) is determined on the basis of a nominal airgap width (WNOM) and/or a manufacturing tolerance and/or stator temperature and/or rotor temperature and/or a measure of rotor eccentricity; and
- a current injection module (12) for injecting the negative Id current (110) into windings (210) of the electrical machine (2) to correct the airgap width (wAG).

An advantage of the control arrangement according to the invention is that it can easily determine whether measures should be taken to avoid a deterioration of the airgap quality. The control arrangement according to the invention can ensure that the width of the airgap - at all points over its circumference - never decreases to a critical level, for example one that would necessitate shutting down of the electrical machine. The control arrangement can also be installed relatively easily to upgrade an existing electrical machine. For example, the current injection module can be realised using an already existing current controller. Present-day electrical machines such as wind turbine generators are controlled using a combination of hardware and software modules. For such a machine, the current injection module of the control arrangement according to the invention might simply comprise an adaptation or upgrade of an already existing software control algorithm. A wind turbine controller may already have a module that adjusts the Id current in order to regulate the terminal voltage of generator. Such a module can be adapted relatively easily to take into account any corrective Id current determined by the evaluation unit.

Accordingly the wind turbine comprises a generator and such a control arrangement for carrying out the steps of the control method according to the invention.

An advantage of the wind turbine is that it can continue to operate even under adverse conditions in which several detrimental factors accrue. For example, in the case of a direct-drive wind turbine with a single bearing supporting an outer rotor, the control arrangement and method according to the invention allow the generator to continue to operate at a high power output level (with resulting high rotor/stator temperatures), since any unfavourable reduction in airgap width can be pre-empted or avoided by the timely injection of negative Id current into the windings of the stator, as will be explained in more detail below.

Particularly advantageous embodiments of the invention are given by the dependent claims, as revealed in the following description.

In the following, without restricting the invention in any way, it may be assumed that the electrical machine is a three-phase AC machine such as a three-phase generator. For the method according to the invention, it is irrelevant which of the field or armature is stationary or rotating. However, to simplify the description, it may be assumed in the following that the stator is the armature and carries the windings, and that the rotor is the field and carries the magnets.

According to the invention, the step of determining a corrective value of negative Id current is performed when the airgap width measurement approaches a predetermined minimum. This predetermined minimum does correspond to a critical airgap width that would otherwise require down-regulation or shutdown (for a machine without this control arrangement). Alternatively, the predetermined minimum may be slightly higher than this critical airgap width. In either case, the corrective measures are applied in a pre-emptive manner to prevent the airgap from ever becoming critically narrow at any point over the circumference of the airgap.

As indicated above, a dq0 transformation is a mathematical transformation of three-phase time-domain signals from a stationary coordinate system to a rotating coordinate system. The dq0 transform can greatly simplify analysis, since three AC quantities are reduced to two DC quantities. After carrying out a relatively straightforward computation on the DC quantities, the inverse transform is applied to recover the corresponding three-phase AC values. The dq0 transformation effectively converts three-phase stator and rotor quantities into a single rotating reference frame, thereby eliminating the effect of time varying inductances which would otherwise make such computations extremely complex.

A three-phase synchronous machine can be modelled by three windings that are separated by 120 physical degrees, and by three phase currents that are equal in magnitude and are separated from one another by 120 electrical degrees. The current lags the voltage by a fixed amount. When the dq0 transformation is applied to such a machine, the d-q axes (which are at an angle of 90° to each other) rotate with an angular velocity that is equal to the angular velocity as the phase voltages and currents. The two DC currents in this dq0 reference frame are referred to as "Id current" (lying on the d axis) and "Iq current" (lying on the q axis).

The direction of magnetic flux in the airgap is along the d axis. Therefore, injection of negative Id current into the windings of the electrical machine will reduce the stator magnetic flux. This key idea of the invention has the effect that the "pull" between rotor and stator is reduced, with the result that a further decrease in airgap width is prevented, particularly in an already overly narrow airgap region. In a preferred embodiment of the invention, a corrective value of negative Id current is injected to maintain the airgap width at the predetermined minimum. For example, the airgap width measurement obtained by the measuring arrangement during operation of the machine may indicate that the smallest airgap width has reduced to a predetermined threshold level or minimum allowable airgap width. The evaluation unit can report this finding to the current control module, which responds by determining a corrective negative Id current value that will prevent the airgap from narrowing further. In this way, a minimum correction is carried out, so that the associated losses are also kept at a minimum. The relatively low cost of the correction is outweighed by the advantages of avoiding damage to the electrical machine and not having to down-regulate the machine or not having to shut it down.

The corrective value of negative Id current can be injected for a limited duration. For example, assumptions can be made (based on prior observations) regarding a suitable duration. Alternatively, the corrective value of negative Id current can be injected until a "healthy" airgap width is reported by the measuring arrangement and evaluation unit.

The measuring arrangement can comprise any means suitable for determining the width of the airgap at one or more points about the circumference of the airgap. In a preferred embodiment of the invention, the measuring arrangement comprises one or more distance sensors, for example a capacitive distance sensor, an optical sensor, an acoustic sensor, a laser distance sensor, etc. A laser distance sensor determines distance by directing a beam of laser light outward and measuring the time for the beam to be reflected back to the sensor. A very rapid and accurate measurement is made possible when such a sensor is used. This kind of sensor can continually measure the airgap width as the rotor rotates. Measurement values can be forwarded to the evaluation unit, which can identify any narrow regions in the airgap and can determine whether these are critically narrow, or whether they are still within a safe limit. As indicated above, a generator for which the outer rotor is supported by a single bearing at the drive end is particularly susceptible to airgap problems arising from eccentricity at the non-drive end. When such a generator is equipped with a control arrangement according to the invention (either at time of manufacture or as a retro-fit upgrade), any critical narrowing of the airgap at the non-drive end can be identified and remedied in good time.

As mentioned above, eccentricity in the rotating component can also arise from high temperatures in the electrical machine, usually originating in the windings on the armature, since the temperature in the windings can reach very high levels, for example when the machine is operating at rated or above-rated output. Therefore, in a further preferred embodiment of the invention, the measuring arrangement comprises a number of temperature sensors, for example one or more temperature sensors arranged to monitor the temperature in the armature and/or one or more temperature sensors arranged to monitor the temperature in the field. Data obtained from observations made on existing machines and/or from simulations can be used to identify a threshold temperature range associated with eccentricity of the rotating component and a resulting critically narrow airgap region. During operation of an electrical machine equipped with a control arrangement according to the invention (either at time of manufacture or as a retro-fit upgrade), such a threshold temperature can be identified in good time, and a suitable value of corrective negative Id current can be injected into the windings to avoid a further narrowing of the airgap.

Preferably, a corrective value of negative Id current is injected until a satisfactory airgap width is achieved over the entire circumference of the airgap. For example, if a critically narrow airgap region is reported, the necessary corrective Id current value is determined and applied until the situation is remedied. In a further preferred embodiment of the invention, the corrective value of negative Id current is adapted according to a change in airgap width measurement. For example, the measurement arrangement might observe an increase in width at the critical region, indicating that the corrective measure is taking effect. To minimise losses, the corrective value of negative Id current can be gradually lessened as the airgap width returns towards a satisfactory value. Equally, if the width at the critical region continues to worsen initially, the corrective value of negative Id current can be gradually increased until the desired corrective effect is observed.

The method according to the invention preferably comprises a prior step of establishing a relationship between values of airgap width and values of negative Id current. A preferred embodiment of the invention is based on observations that relate the magnitude of the radial force acting on a magnet to the airgap width. For example, information can be gathered for a specific machine, relating changes in radial force magnitude to changes in local airgap width. Further observations relate the Id current to the magnitude of radial force acting on a magnet. These relationships - which can be established through experimentation on existing operational generators and/or simulations - are preferably applied in the method according to the invention to remedy a problematic airgap condition arising from eccentricity. In a particularly straightforward embodiment, a look-up table (LUT) is compiled, relating airgap width values to corrective Id current values. The number of value pairs can depend on the dimensions of the electrical machine and/or on the accuracy of the measurement arrangement. For example, a laser distance sensor can deliver airgap width measurements that are accurate to within a few micrometres. Correspondingly fine adjustments can be made to the corrective negative Id current in order to achieve the desired reduction in radial force magnitude. Preferably, the control arrangement according to the invention comprises a memory module for storing such a LUT relating values of airgap width to corrective Id current values.

Since the method and control arrangement according to the invention make it possible to identify potential airgap problems and to take remedial action to prevent a critical situation, an electrical machine that will be controlled using the method according to the invention can be designed to have a narrower nominal airgap width. The reason for this is because it is no longer necessary to allow for the cumulative worst-case eccentricity problems in such a machine. It follows that an electrical machine that utilizes the inventive method and control arrangement will also have a corresponding higher output during normal operation, since the narrower airgap results in increased efficiency. The nominal airgap of such an electrical machine can be significantly narrower - for example up to 10% narrower - than the nominal airgap of a comparable prior art electrical machine that does not utilize the inventive method and control arrangement. For example, a conventional direct-drive wind turbine with an outer rotor supported by a single bearing is particularly susceptible to airgap problems, since the heavy rotor is only supported at one end (usually the drive end). Any eccentricity already present in the rotor housing and/or any eccentricity arising during the lifetime of the generator or from wind loading will be magnified at the non-drive end. The nominal airgap of such a prior art generator must be large enough to prevent collision damage and/or the generator must be down-regulated or shut down during critical situations. However, a wind turbine according to the invention can be realized with a smaller nominal airgap width, for example up to 10% less, and the pre-emptive corrective action can prevent the airgap width from ever decreasing beyond a critical level. The inventive wind turbine can therefore have a higher output over its lifetime. Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a cross-section through an electrical machine according to a first embodiment of the invention;
Fig. 2 shows a cross-section through an electrical machine according to a second embodiment of the invention;
Fig. 3 illustrates the action of radial magnetic forces in an electrical machine;
Fig. 4 shows d and q axes of a dq0 transformation as applied to an electrical machine;
Fig. 5 shows graphs of radial magnetic force against airgap width;
Fig. 6 shows graphs of radial magnetic force against Id current;
Fig. 7 shows graphs of airgap width against Id current;
Fig. 8 shows a first cross-section through a wind turbine generator;
Fig. 9 shows a further cross-section through a wind turbine generator.

In the diagrams, like numbers refer to like objects throughout. Objects in the diagrams are not necessarily drawn to scale.

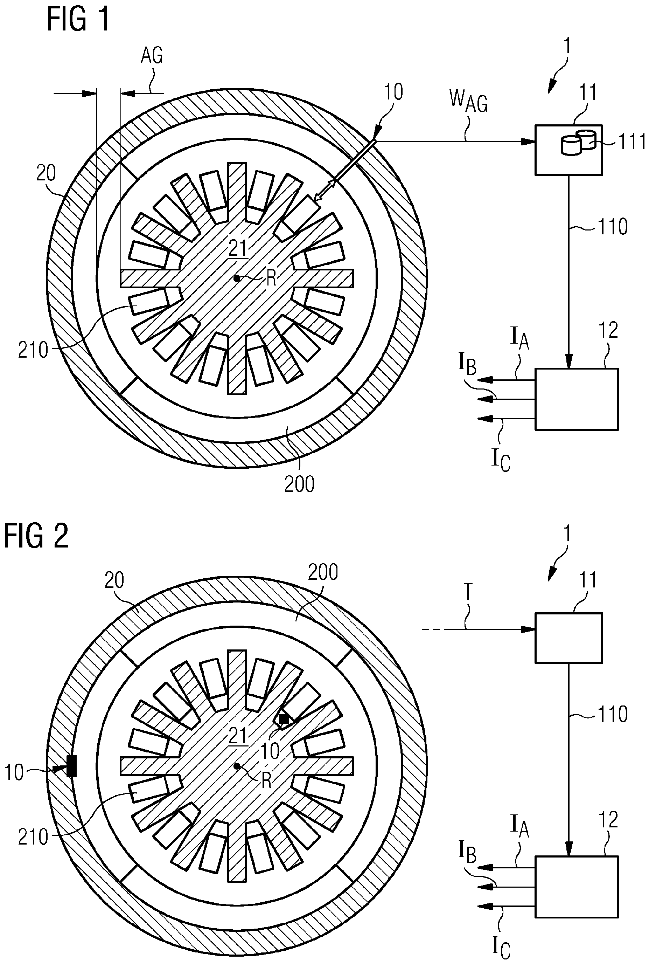

Fig. 1 shows a cross-section through a three-phase electrical machine 2 according to a first embodiment of the invention. The diagram is very simplified, and shows four magnet poles 200 arranged on an outer rotor 2, to face windings 210 arranged on a stator 21. Magnets 200 and windings 210 face each other across an airgap AG, which is also greatly exaggerated in the diagram. A monitoring arrangement 10 uses a distance sensor, for example a laser distance sensor, to measure the airgap width as the rotor 20 rotates about the stator 21. Airgap width measurements w_{AG} are forwarded to an evaluation unit 11. This can decide whether an airgap width measurement w_{AG} is narrower than an acceptable value. In such a situation, the evaluation unit 11 can consult a LUT stored in a memory module 111. The LUT can have been put together in a prior step as described above. In this exemplary embodiment, the LUT is a list of value pairs relating airgap width values to corrective Id current values. When a too-narrow airgap width measurement w_{AG} is identified by the evaluation unit 11, it retrieves a corresponding corrective negative Id value 110 and forwards this to a current control module 12. The current control module 12, which can be part of an existing regulation arrangement of the electrical machine 2, responds by generating phase current values I_{A}, I_{B}, I_{C} for injecting into the windings 210 of the machine 2.

Fig. 2 shows a cross-section (also greatly simplified) through an electrical machine 2 according to a second embodiment of the invention. In this exemplary embodiment, the monitoring arrangement 10 comprises temperature sensors for monitoring the temperature in the stator 21 and rotor 20. Temperature measurements T are forwarded (e.g. over a wireless interface) to an evaluation unit 11, which can decide - on the basis of a previously established relationship between temperature and airgap width - whether corrective measures should be taken to maintain a healthy airgap width. To this end, the evaluation unit 11 can consult a table stored in a memory module 111, in this case a list of value pairs relating temperature measurements to corrective Id current values. Since the relationship between temperature and airgap width has been established in a prior step, the step of obtaining a temperature measurement during operation of the machine can be regarded as a step of obtaining an airgap width measurement. When a too-high temperature measurement is identified by the evaluation unit 11, it retrieves a corresponding corrective negative Id value 110 and forwards this to a current control module 12, which can respond in the manner described above.

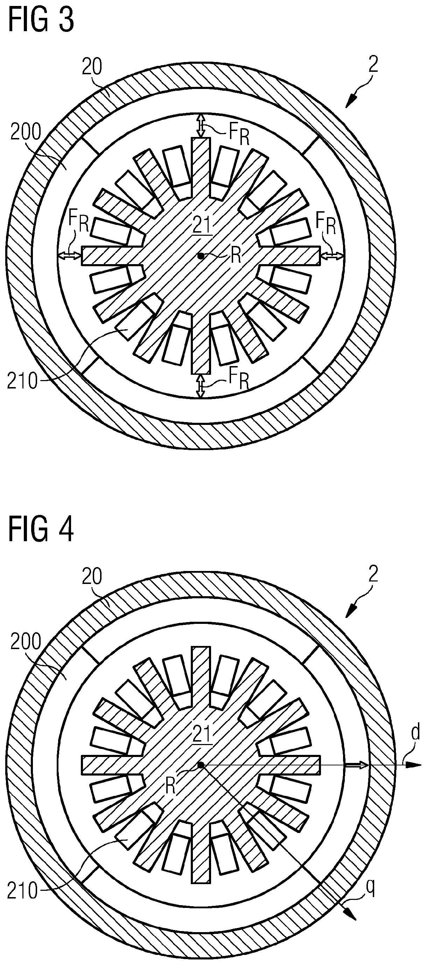

Fig. 3 illustrates the action of radial magnetic force F_{R} in an electrical machine 2. When permanent magnets 200 are used, there is a radial magnetic force F_{R} present even when there are no currents in the stator windings 210. A "pull" is exerted between the rotor 20 and stator 21 due to this radial magnetic force F_{R}, and the magnitude of this force F_{R} increases as the airgap width decreases. For this reason, any prior eccentricity combined with the increased radial magnetic force F_{R} can have a serious detrimental effect on the airgap width, especially when the rotating component is supported at only one end by a single bearing. In a prior art machine, the nominal airgap width must to be sufficiently large to allow for local decreases in airgap width during operation of the machine. In an electrical machine with a control arrangement according to the invention, the magnitude of the radial magnetic force F_{R} is reduced by injecting negative Id current into the windings 210.

The principle of the control method is described with the aid of Fig. 4. Here, d and q axes of a dq0 reference frame are indicated in the diagram. In a dq0 reference frame, as will be known to the skilled person, the three-phase AC currents are transformed into two DC currents, namely Id current (which lies along the d axis) and Iq current (which lies along the q axis). The dq-axes rotate synchronously with rotor 20, whereby the d-axis is aligned with the centre of a reference magnet pole, and the q-axis extends between two adjacent poles.
The radial magnetic field F_{R} is in the direction of the d-axis. The windings 210 on the stator 21 are injected with currents in a controlled manner to produce a desired armature reaction field, whereby the armature reaction is the effect of the armature flux (arising when currents are induced in the windings) on the main field flux (the magnetic flux of the magnets). When q-axis current Iq is injected into the windings 210, the resulting armature reaction field is in the direction of q-axis. This q-axis armature reaction field interacts with the magnetic field arising from the magnets to produce torque.

A certain d-axis current Id, when injected into the windings (after an appropriate inverse transform), will affect the magnetic field in the direction of d-axis. For a surface-mounted permanent magnet machine with negligible rotor saliency, this d-axis armature reaction field does not produce torque and does not contribute to energy conversion. When the Id current is zero or has a positive value, the resulting d-axis armature reaction field is in the same direction as the magnetic field arising from the magnets, i.e. the forces are added, and the resulting radial magnetic force F_{R} acts across the airgap to pull the magnets towards the windings. However, when a negative Id current is applied, the resulting d-axis armature reaction field is opposite in direction to the magnetic field due to magnets, so that the radial magnetic force F_{R} is reduced. When the negative Id current is sufficiently large, the radial magnetic force F_{R} can change direction, acting to "push" the magnets away from the windings.

A negative Id current has the effect of reducing the radial magnetic force F_{R}, and therefore corrects the undesirably narrow local airgap width. However, the entire airgap of the electrical machine is affected by the injection of negative Id current into the windings, i.e. the reduction in F_{R} is felt over any narrow airgap regions over the entire circumference of the airgap. The same negative Id current results in a larger additive force at a local narrow airgap region, so that the effect of the method according to the invention is to reduce the eccentricity.

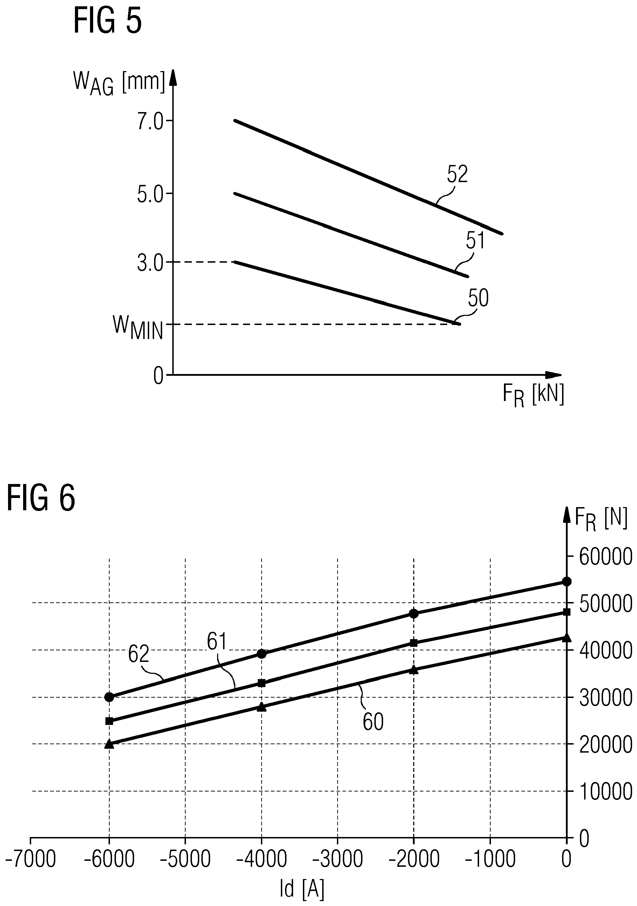

Fig. 5 shows graphs 50, 51, 52 of airgap width w_{AG} [mm] against radial magnetic force F_{R} [kN] for comparable electrical machines, or for a single type of electrical machine with different nominal airgap widths. Graph 50 corresponds to a machine with a nominal airgap width of 3 mm, graph 51 corresponds to a machine with a nominal airgap width of 5 mm, and graph 52 corresponds to a machine with a nominal airgap width of 7 mm. As described above, a locally narrow airgap region can result from eccentricity, and this can be worsened by the resulting increased larger radial magnetic force F_{R} that acts to pull the magnets towards the stator. The diagram shows how the increasing radial magnetic force F_{R} results in a decrease in local airgap width towards a critical minimum w_{MIN} (using graph 50 as an example). A local airgap width that is less than this critical minimum w_{MIN} can lead to a catastrophic collision between rotor and stator, and must be avoided.

Fig. 6 shows graphs 60, 61, 62 of radial magnetic force F_{R} [N] against Id current [A] for the same setup used to arrive at the data of Fig. 5. A first graph 60 shows the relationship between negative Id current and radial force F_{R} for a machine with a nominal airgap of 7 mm. The diagram shows that for an Id current of 0 A, the radial force acting on a pole is about 42 kN. As the Id current is decreased to minus 6,000 A (i.e. "the negative Id current is increased"), the radial force decreases to 20 kN. A second graph 61 shows the effect of negative Id current in a generator with a nominal airgap width of 5 mm. Here, the radial force acting on a pole decreases from about 48 kN to 25 kN when the Id current is decreased from 0 to -6,000 A. A third graph 62 shows the effect of negative Id current in a generator with a nominal airgap width of 3 mm. In this case, the radial force acting on a pole decreases from about 54 kN to 30 kN when the Id current is decreased from 0 to -6,000 A. In each case, the radial force acting on a pole is reduced by more than 20 kN.

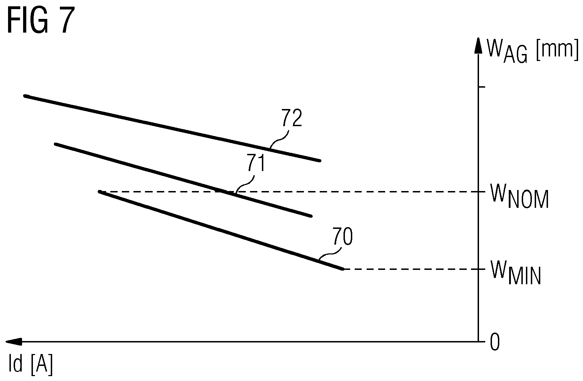

Fig. 7 shows graphs 70, 71, 72 of airgap width w_{AG} [mm] against Id current [A] obtained using the relationships established in Figs. 5 and 6. Increasing quantities of negative Id current (i.e. the Id current becomes more negative) injected into the windings result in an improvement in airgap width, whereby the correction applies to a local narrow airgap region and acts to remedy this. In this way, the local airgap width can be increased from a critical minimum w_{MIN} back towards the desirable nominal airgap width w_{NOM}, indicated for one graph 70. The negative Id current can be injected into the windings for as long as necessary, i.e. for as long as it takes to correct an undesirably narrow airgap region. Negative Id current injection is not always needed, and may be required only occasionally, for example when one or more worst case situations occur at the same time, e.g. worst component dimensions and/or worst stator temperature and/or worst rotor temperature, and/or worst inherent eccentricity. During normal operation, the negative Id current injection is not needed, so that any losses relating to the injection of Id current are kept to a minimum.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of controlling an electrical machine (2) comprising a rotor (20) and a stator (21) separated by an airgap (AG), which method comprises the steps of
- obtaining a measurement (w_{AG}) of airgap width during operation of the machine (2);
- determining a corrective value;
**characterised in that** said corrective value is a negative Id current (110) on the basis of the airgap width measurement (w_{AG}) when the airgap width measurement (w_{AG}) reaches a predetermined minimum airgap width (w_{MIN}), which predetermined minimum airgap width (w_{MIN}) is determined on the basis of a nominal airgap width (w_{NOM}) and/or a manufacturing tolerance and/or stator temperature and/or rotor temperature and/or a measure of rotor eccentricity; and
- injecting the negative Id current (110) into windings (210) of the electrical machine (2) to correct the airgap width.

2. A method according to claim 1, wherein the corrective value of negative Id current (110) is injected to prevent a reduction in airgap width below the predetermined minimum (w_{MIN}).

3. A method according to any of the preceding claims, wherein a corrective value of negative Id current (110) is injected until a satisfactory airgap width measurement (w_{AG}) is observed.

4. A method according to any of the preceding claims, wherein the corrective value of negative Id current (110) is adapted according to a change in observed airgap width measurement (w_{AG}).

5. A method according to any of the preceding claims, comprising a prior step of establishing a relationship between values of airgap width and values of negative Id current.

6. A method according to any of the preceding claims, wherein the relationship between values of airgap width and values of negative Id current is established on the basis of a further relationship between a radial magnetic force (F_{R}) acting on a magnet (200) and a corresponding airgap width and/or a further relationship between the radial magnetic force (F_{R}) acting on a magnet (200) and negative Id current.

7. A control arrangement (1) of an electrical machine (2) comprising a rotor (20) and a stator (21) separated by an airgap (AG), the control arrangement (1) comprises
- a measuring arrangement (10) realized to obtain a measurement (100) of airgap width (w_{AG}) during operation of the machine (2);
- an evaluation unit (11) realized to determine a corrective value of negative Id current (110) on the basis of the airgap width measurement (w_{AG}) when the airgap width measurement (w_{AG}) reaches a predetermined minimum airgap width (w_{MIN}), which predetermined minimum airgap width (w_{MIN}) is determined on the basis of a nominal airgap width (w_{NOM}) and/or a manufacturing tolerance and/or stator temperature and/or rotor temperature and/or a measure of rotor eccentricity; and
- a current injection module (12) for injecting the negative Id current (110) into windings (210) of the electrical machine (2) to correct the airgap width (w_{AG}).

8. A control arrangement according to claim 7, comprising a memory module (111) for storing a look-up table relating values of airgap width (w_{AG}) to corrective Id current (110) values.

9. A control arrangement according to claim 7 or claim 8, wherein the measuring arrangement (10) comprises a number of laser distance sensors.

10. A control arrangement according to any of claims 7 to 9, wherein the measuring arrangement (10) comprises a number of temperature sensors.

11. A wind turbine comprising a generator (2) and a control arrangement (1) according to any of claims 7 to 10 for carrying out the steps of the control method according to any of claims 1 to 6.

12. A wind turbine according to claim 11, realized as a direct-drive wind turbine with an outer rotor (20) bearing an arrangement of permanent magnets (200).

## Patentansprüche

1. Verfahren zum Steuern einer elektrischen Maschine (2) mit einem Rotor (20) und einem Stator (21), die durch einen Luftspalt (AG) getrennt sind, wobei das Verfahren folgende Schritte umfasst:
- Gewinnen eines Messwerts (w_{AG}) für die Luftspaltbreite beim Betrieb der Maschine (2),
- Bestimmen eines Korrekturwerts,
**dadurch gekennzeichnet, dass** es sich bei dem Korrekturwert um einen negativen Id-Strom (110) auf der Grundlage des Luftspaltbreitenmesswerts (w_{AG}) handelt, wenn der Luftspaltbreitenmesswert (w_{AG}) eine vorgegebene Mindestluftspaltbreite (w_{MIN}) erreicht, die auf der Grundlage einer Nennluftspaltbreite (w_{NOM}) und/oder einer Fertigungstoleranz und/oder einer Statortemperatur und/oder einer Rotortemperatur und/oder eines Maßes für die Rotorexzentrizität bestimmt wird, und
- Einspeisen des negativen Id-Stroms (110) in Wicklungen (210) der elektrischen Maschine (2) zum Korrigieren der Luftspaltbreite.

2. Verfahren nach Anspruch 1, wobei der Korrekturwert für den negativen Id-Strom (110) eingespeist wird, um eine Verringerung der Luftspaltbreite unter den vorgegebenen Mindestwert (w_{MIN}) zu vermeiden.

3. Verfahren nach einem der vorhergehenden Ansprüche, wobei ein Korrekturwert für den negativen Id-Strom (110) eingespeist wird, bis ein ausreichender Luftspaltbreitenmesswert (w_{AG}) festgestellt wird.

4. Verfahren nach einem der vorhergehenden Ansprüche, wobei der Korrekturwert für den negativen Id-Strom (110) einer Änderung des festgestellten Luftspaltbreitenmesswerts (w_{AG}) entsprechend angepasst wird.

5. Verfahren nach einem der vorhergehenden Ansprüche, das zuvor ein Herstellen einer Beziehung zwischen Werten für die Luftspaltbreite und Werten für den negativen Id-Strom umfasst.

6. Verfahren nach einem der vorhergehenden Ansprüche, wobei die Beziehung zwischen Werten für die Luftspaltbreite und Werten für den negativen Id-Strom auf der Grundlage einer weiteren Beziehung zwischen einer auf einen Magneten (200) einwirkenden radialen Magnetkraft (F_{R}) und einer entsprechenden Luftspaltbreite und/oder einer weiteren Beziehung zwischen der auf einen Magneten (200) einwirkenden radialen Magnetkraft (F_{R}) und dem negativen Id-Strom hergestellt wird.

7. Steueranordnung (1) einer elektrischen Maschine (2) mit einem Rotor (20) und einem Stator (21), die durch einen Luftspalt (AG) getrennt sind, wobei die Steueranordnung (1) Folgendes umfasst:
- eine Messanordnung (10), die so ausgelegt ist, dass sie einen Messwert (100) für die Luftspaltbreite (w_{AG}) beim Betrieb der Maschine (2) gewinnt,
- eine Beurteilungseinheit (11), die so ausgelegt ist, dass sie einen Korrekturwert für den negativen Id-Strom (110) auf der Grundlage des Luftspaltbreitenmesswerts (w_{AG}) bestimmt, wenn der Luftspaltbreitenmesswert (w_{AG}) eine vorgegebene Mindestluftspaltbreite (W_{MIN}) erreicht, die auf der Grundlage einer Nennluftspaltbreite (w_{NOM}) und/oder einer Fertigungstoleranz und/oder einer Statortemperatur und/oder einer Rotortemperatur und/oder eines Maßes für die Rotorexzentrizität bestimmt wird, und
- ein Stromeinspeismodul (12) zum Einspeisen des negativen Id-Stroms (110) in Wicklungen (210) der elektrischen Maschine (2) zum Korrigieren der Luftspaltbreite (w_{AG}).

8. Steueranordnung nach Anspruch 7, die ein Speichermodul (111) zum Speichern einer Nachschlagetabelle umfasst, welche Werte für die Luftspaltbreite (w_{AG}) mit Korrekturwerten für den Id-Strom (110) verknüpft.

9. Steueranordnung nach Anspruch 7 oder 8, wobei die Messanordnung (10) eine Anzahl Laserdistanzsensoren umfasst.

10. Steueranordnung nach einem der Ansprüche 7 bis 9, wobei die Messanordnung (10) eine Anzahl Temperatursensoren umfasst.

11. Windenergieanlage mit einem Generator (2) und einer Steueranordnung (1) nach einem der Ansprüche 7 bis 10 zum Durchführen der Schritte des Steuerverfahrens nach einem der Ansprüche 1 bis 6.

12. Windenergieanlage nach Anspruch 11, die als getriebelose Windenergieanlage mit einem Außenrotor (20) ausgelegt ist, der eine Anordnung von Permanentmagneten (200) trägt.

## Revendications

1. Procédé de commande d'une machine électrique (2) comprenant un rotor (20) et un stator (21) séparés par un entrefer (AG), lequel procédé comprend les étapes de
- obtention d'une mesure (w_{AG}) de la largeur de l'entrefer pendant le fonctionnement de la machine (2) ;
- détermination d'une valeur corrective ;
**caractérisée en ce que** ladite valeur corrective est un courant Id négatif (110) sur la base de la mesure de largeur de l'entrefer (w_{AG}) lorsque la mesure de largeur de l'entrefer (w_{AG}) atteint une largeur d'entrefer minimum prédéterminée (w_{MIN}), laquelle largeur d'entrefer minimum prédéterminée (W_{MIN}) est déterminée sur la base d'une largeur d'entrefer nominale (w_{NOM}) et/ou d'une tolérance de fabrication et/ou d'une température de stator et/ou d'une température de rotor et/ou d'une mesure de décentrage du rotor ; et
- injection du courant Id négatif (110) dans des enroulements (210) de la machine électrique (2) pour corriger la largeur de l'entrefer.

2. Procédé selon la revendication 1, dans lequel la valeur corrective du courant Id négatif (110) est injectée pour empêcher une réduction de la largeur de l'entrefer en dessous du minimum prédéterminé (w_{MIN}).

3. Procédé selon l'une quelconque des revendications précédentes, dans lequel une valeur corrective de courant Id négatif (110) est injectée jusqu'à ce qu'une mesure de largeur de l'entrefer satisfaisante (w_{AG}) soit observée.

4. Procédé selon l'une quelconque des revendications précédentes, dans lequel la valeur corrective de courant Id négatif (110) est adaptée en fonction d'un changement de la mesure de largeur de l'entrefer (w_{AG}) observée.

5. Procédé selon l'une quelconque des revendications précédentes, comprenant une étape préalable d'établissement d'une relation entre les valeurs de largeur de l'entrefer et les valeurs de courant Id négatif.

6. Procédé selon l'une quelconque des revendications précédentes, dans lequel la relation entre les valeurs de largeur de l'entrefer et les valeurs de courant Id négatif est établie sur la base d'une autre relation entre une force magnétique radiale (F_{R}) agissant sur un aimant (200) et une largeur d'entrefer correspondante et/ou une autre relation entre la force magnétique radiale (F_{R}) agissant sur un aimant (200) et un courant Id négatif.

7. Agencement de commande (1) d'une machine électrique (2) comprenant un rotor (20) et un stator (21) séparés par un entrefer (AG), l'agencement de commande (1) comprend
- un agencement de mesure (10) réalisé pour obtenir une mesure (100) de la largeur de l'entrefer (w_{AG}) pendant le fonctionnement de la machine (2) ;
- une unité d'évaluation (11) réalisée pour déterminer une valeur corrective de courant Id négatif (110) sur la base de la mesure de largeur de l'entrefer (w_{AG}) lorsque la mesure de largeur de l'entrefer (w_{AG}) atteint une largeur d'entrefer minimum prédéterminée (w_{MIN}), laquelle largeur d'entrefer minimum prédéterminée (w_{MIN}) est déterminée sur la base d'une largeur d'entrefer nominale (w_{NOM}) et/ou d'une tolérance de fabrication et/ou d'une température de stator et/ou d'une température de rotor et/ou d'une mesure de décentrage du rotor ; et
- un module d'injection de courant (12) pour injecter le courant Id négatif (110) dans des enroulements (210) de la machine électrique (2) pour corriger la largeur de l'entrefer (w_{AG})

8. Agencement de commande selon la revendication 7, comprenant un module de mémoire (111) pour stocker une table de correspondance reliant les valeurs de la largeur de l'entrefer (w_{AG}) aux valeurs correctives du courant Id (110).

9. Agencement de commande selon la revendication 7 ou la revendication 8, dans lequel l'agencement de mesure (10) comprend un certain nombre de capteurs de distance laser.

10. Agencement de commande selon l'une quelconque des revendications 7 à 9, dans lequel l'agencement de mesure (10) comprend un certain nombre de capteurs de température.

11. Éolienne comprenant un générateur (2) et un agencement de commande (1) selon l'une quelconque des revendications 7 à 10 pour exécuter les étapes du procédé de commande selon l'une quelconque des revendications 1 à 6.

12. Éolienne selon la revendication 11, réalisée sous forme d'éolienne à entraînement direct avec un rotor extérieur (20) portant un agencement d'aimants permanents (200).
